# EUROPÄISCHE PATENTSCHRIFT

(11) **EP 0 798 671 B1**
(45) Veröffentlichungstag und Bekanntmachung des Hinweises auf die Patenterteilung: **04.10.2006**
(21) Anmeldenummer: 97101881.7
(22) Anmeldetag: 06.02.1997
(51) Int. Cl.: G07F 7/08, G07B 15/00, G07C 9/00, G07F 7/10

(54) **Off-Line-Datenstationen mit virtueller On-Line-Fähigkeit**
Off-line data terminal with virtual on-line capabilities
Terminal de données autonome avec des capacités virtuelles d'utilisation en direct

(30) Priorität: 25.03.1996 DE 19611632
(43) Veröffentlichungstag der Anmeldung: 01.10.1997
(73) Patentinhaber: Deutsche Telekom AG, 53113 Bonn (DE)
(72) Erfinder: Korst, Uwe K. H., Dipl.-Ing., 64625 Bensheim (DE)

(56) Entgegenhaltungen:
- EP-A- 0 360 613
- EP-A- 0 643 373
- EP-A- 0 658 862
- GB-A- 2 208 955
- US-A- 4 510 382
- US-A- 4 780 601
- US-A- 4 804 825
- US-A- 5 276 312

## Beschreibung

Die Erfindung betrifft ein Verfahren und eine Anordnung für Off-Line-Terminals bzw. -Stationen oder -Endgeräte nach dem Oberbegriff des Patentanspruchs 1 bzw. 8 sowie die Verwendung gemäß Oberbegriff des Patentanspruchs 12.

Ein gattungsgemäßes Verfahren und eine gattungsgemäße Anordnung ist aus der US-A- 4 804 825 bekannt, wo Transaktionsdaten mittels mobiler Datenträger zwischen einem Off-Line-Terminal und einem On-Line-Terminal übertragen werden.

In Bezug auf den Datenaustausch von Terminals unterscheidet man On-Line und Off-Line Geräte. Die On-Line-Terminals zeichnen sich dadurch aus, daß ein ständiger Datenaustausch über einen Telekommunikationsanschluß oder eine Netzwerkverbindung (LAN, WAN) erfolgt oder dieser periodisch mittels Wählleitungen (zum Beispiel analoges Fernsprechnetz oder ISDN oder Datex-P) erfolgt. Dabei ist es jederzeit möglich Daten nach Bedarf mit einem Zentralrechner auszutauschen. Dies stellt die optimale Lösung bezüglich der Flexibilität dar, da somit ein Terminal jederzeit mit neuer Software, Daten und Parametern ausgestattet werden kann. Andererseits ist es möglich, in dem Terminal angefallene Statusdaten wie beispielsweise Störungsmeldungen, Telemetriedaten oder aber auch Abrechnungsdaten zu jeder Zeit an einen Zentralrechner oder eine Datenbank zu übergeben. Bei sicherheitsrelevanten Ereignissen kann so unmittelbar eine Erkennung erfolgen, und Abhilfemaßnahmen können eingeleitet werden.

Demgegenüber existieren auch preisgünstige Off-Line-Terminals, die keine unmittelbare Möglichkeit haben, Daten mit einem Zentralrechner auszutauschen. Solche Terminals sind beispielsweise bekannte Fahrkartenautomaten oder Verkaufsautomaten.

Ein Nachteil von On-Line-Terminals sind die hohen Kosten für das Terminal selbst und für die Übertragung der Daten.

Ein Datenaustausch bei Off-Line-Terminals bedeutet einen hohen Aufwand, da das Terminal jeweils von einer Person aufgesucht werden muß, zum Beispiel bei Fahrkartenautomaten dauert es somit recht lange bis eine Störung an dem Automat erkannt wird.

Bei einer Anpassung von Tarifparametern ist es bei diesen Off-Line-betriebenen Fahrkartenautomaten jeweils erforderlich, den Automat aufzusuchen, um beispielsweise eine Tarifinformation einzugeben.

Bei den heutigen Terminals für Verkaufsfunktionen bzw. zum Anbieten einer Dienstleistung wird als Zahlungsmittel Geld eingesetzt. Erst langsam setzen sich an solchen Dienstleistungsautomaten als Zahlungsmittel auch andere Medien durch wie beispielsweise Kreditkarten oder Chipkarten. Heute bekannt als solche Systeme sind beispielsweise: Danmont in Dänemark, Mondex in Großbritannien und Citicard in Berlin.

Nachteil all dieser Dienstleistungs-Terminals ist es, daß entweder ein On-Line-Anschluß vorhanden sein muß oder die erforderlichen Daten durch das Aufsuchen des Terminals "entsorgt" werden.

Beispiele solcher Dienstleistungsterminals sind bekannt aus EP 0 582 812 bzw. beschrieben in DE-195 45 705.6. Die vorgenannten Dienstleistungsterminals zeichnen sich dadurch aus, daß als Zahlungsmedium Chipkarten eingesetzt werden. Bei der Ausführung nach EP 0 582 812 wird eine Chipkarte zum Zugang oder für Bezahlvorgänge benutzt, jedoch erst nachdem eine Authentifikation der Karte durchgeführt wurde. In einem zweiten Schritt erfolgt der Abbuchungsvorgang in der Karte. Der Abbuchungsvorgang wird mittels kryptografischer Funktion geschützt. Hierzu wird beispielsweise ein Sicherheitsmodul eingesetzt, mit dem alle Sicherheitsfunktionen im Zusammenspiel mit der Chipkarte unterstützt werden. Für den Kartenausgeber ist es von sehr hoher Bedeutung Informationen über die in den Terminals eingesetzten Sicherheitsmodule zu erhalten. Beispielsweise muß ein Diebstahl von Sicherheitsmodulen in dem Gesamtsystem erkannt werden. Weiterhin ist es aus Sicherheitsgründen für ein Zentralsystem von hoher Bedeutung, Nutzungsdaten von dem Sicherheitsmodul in Form von Transaktionszählern, Umsatzzahlen, oder über die Anzahl von abgelehnten Chipkarten zu erhalten.

Außerdem sind ähnliche Systeme und Verfahren durch die US-A-4,859,837, WO-A-90 15 382 und die deutsche Patentanmeldung P 42 43 851.9 bekanntgeworden. Chipkarten mit medizinischen Daten werden derzeit in verschiedenen Versuchsstadien eingesetzt. Solche Chipkarten-Anwendungen sind beispielsweise:
- Einsatz der SmartCard in der Krebsnachsorge (Vortrag von Prof. Dr. Claus O. Köhler, DKFZ Heidelberg, Vortrag bei der GMD Darmstadt am 05.02.1992.

Im Rahmen der automatischen Erhebung von Straßenbenutzungsgebühren besteht ein Problem darin, daß gerade für die Vielzahl von Datenstationen entlang des Straßenverkehrsnetzes eine Vielzahl von on-Line-fähigen Datenstationen aufgebaut werden müßte.

Bei den vorgenannten Dienstleistungsautomaten kommt die erfindungsgemäße Lösung zum Tragen.

Der Erfindung liegt die Aufgabe zugrunde ein Verfahren und eine Anordnung für Off-Line-Terminals bzw. -Stationen oder -Endgeräte gemäß der im Oberbegriff des Anspruches 1 und 8 angegebenen Art derart zu verbessem, dass ein Datenaustausch mit Datenbanken, Datenverarbeitungs- bzw. Rechnersystemen auch ohne Datenanschluß trotz geringer Speicherkapazität mobiler Datenträger über diese ermöglicht wird, das heißt eine virtuelle On-Line-Fähigkeit von Off-Line-Geräten bewirken sollen.

Diese Aufgabe wird für das Verfahren mit den Merkmalen des kennzeichnenden Teils in Verbindung mit dem oberbefriffsmerkmalen gelöst.

Für die Anordnung wird die Aufgabe durch die Merkmale des Anspruches 8 gelöst.

Der Erfindung liegt die Erkenntnis zugrunde, dass für die Datenantennen, die Off-Line-Stationen regelmäßig von Personen oder mobilen Einrichtungen aufgesucht werden. Die Daten werden dabei an Datenträger dieser mobilen Einrichtungen oder an Datenträger der Person übergeben.

Da in dem mobilen Datenträger nur begrenzt Speicherkapazität vorhanden ist, werden immer nur eine vorher festgelegte Anzahl von Daten in den Speicher des mobilen Datenträgers eingeschrieben. Mit einem im Off-Line-Terminal festgelegten Algorithmus wird nur bestimmt, in wieviel verschiedene mobile Datenträger über einen bestimmten Zeitraum bei jeweiliger Nutzung des Off-Line-Terminals die gleiche Datenart des Off-Line-Terminals eingeschrieben wird.

Sobald der mobile Datenträger zu einen Ort mit On-Line-Station kommt, werden die Daten übergeben. Gemäß statistischer Faktoren kann nachgewiesen werden, dass mit einer sehr hohen Wahrscheinlichkeit eine Datenaustausch mit allen Off-Line-Stationen stattfindet.

Weitere Merkmale, Lösungen bzw. der Ausgestaltungen sind in den weiteren Patentansprüchen beschrieben bzw. angegeben.

Die Erfindung wird im folgenden anhand von in den Zeichnungen dargestellten Ausführungsbeispielen näher beschrieben.

In der Zeichnung bedeuten:
- Fig. 1: ein Prinzipschaltbild eines Systems mit off- und On-Line-Stationen und
- Fig. 2: einen Datenträger mit verschiedenen Speicherbereichen sowie Details von On-Line- oder Off-Line-Terminals bzw. -Stationen.

Im folgenden und in der Zeichnung werden die aufgeführten Bezugszeichen und Begriffe verwendet:
- 1: On-Line-Terminal oder -Station
- 2: Zentralrechner oder Systemzentrale
- 3: Wählnetz
- 4: Mobiler Datenträger, Karte oder Chipkarte
- 5: Off-Line-Terminal
- 10: Speicher oder -medium
- 11: Ansteuereinheit des mobilen Datenträgers
- 12: zusätzlicher Speicher des mobilen Datenträgers
- 13: zusätzlicher Speicher eines Terminals
- 14: Kartenleser
- 15: Interne Verarbeitungslogik
- 16: Sicherheitsmodul
- 17: On-Line-Interface

Die Funktionsweise einer Anordnung mit dem erfindungsgemäßen Verfahrens ist nachfolgend beschrieben.

Zu beachten ist bei all diesen Anwendungen, daß keinerlei datenschutzrelevante Daten auf diese Art und Weise an Unbefugte gelangen, somit ist bei jeder Realisierung individuell im Rahmen einer Evaluierung die Einhaltung der entsprechenden Regelungen zu beachten.

Die erfindungsgemäße Lösung ist überall dort einsetzbar, wo Informationen von einer Off-Line-Station übertragen werden müssen, wobei diese Off-Line-Station dadurch gekennzeichnet ist, daß keinerlei Datenanschluß vorhanden ist. Da aber trotzdem Daten im geringeren Umfang und mit geringer zeitlicher Priorität mit einer zentralen Datenstation ausgestauscht werden sollten, sich aber aus Wirtschaftlichkeitsgründen kein Datenanschluß lohnt bzw. das Gesamtsystem durch diese Konfiguration unwirtschaftlich wird, kommt die nachfolgende erfindungsgemäße Lösung vorteilhaft zum Einsatz.

Für den Datenaustausch ist es erforderlich, daß die Off-Line-Station regelmäßig von Personen oder mobilen Einrichtungen aufgesucht wird, wobei die Daten dann an mehrere Datenträger dieser mobilen Einrichtung oder an Datenträger der Person übergeben werden, wodurch diese Daten explosionsartig auf verschiedenste Datenträger übergeben werden. Sobald dieser Datenträger nun an einen Ort mit einer On-Line-Station kommt, werden die Daten übergeben. Gemäß statistischer Funktionen kann nachgewiesen werden, daß mit einer sehr hohen Wahrscheinlichkeit ein Datenaustausch mit allen Off-Line-Stationen stattfindet.

Im Rahmen eines sogenannten Pay-Card Konzeptes gibt die Deutsche Telekom als Kartenausgeber Multifunktionale Chipkarten (MFC) an ihre Kunden aus. Multifunktionale Chipkarten zeichnen sich dadurch aus, daß in einem festcodierten ROM-Bereich ein Betriebssystem gespeichert ist. Solche Betriebssysteme sind genormt, beispielsweise gemäß CEN 726-3. (Requirements for IC cards and terminals for telecommunication Use, Part 3). Bei solchen MFCs ist es möglich entsprechende Anwendungen zum Zeitpunkt der Initialisierung in den EEPROM-Bereich zu laden. Im Rahmen des Pay-Card-Konzeptes der Deutschen Telekom AG wird eine sogenannte Elektronische Geldbörse eingesetzt. Die Grundstrukturen solcher Anwendungen sind genormt, zum Beispiel in ETSI/D/EN/TE 090114. Part 4 - Payment methods Version 4 v. 07.02.92. Alle diese Konzepte zeichnen sich dadurch aus, daß beliebig oft - bis zu einer in der Karte oder vom Terminal festgelegten Maximalsumme - elektronisch Geldbeträge in die Karte geladen werden können. Für das Laden solcher Geldbeträge werden kryptografische Verfahren eingesetzt. Da dieser Vorgang äußerst sicherheitssensitiv ist, erfolgt solch ein Ladevorgang in der Regel immer On-Line zwischen einer Systemzentrale und einer Chipkarte. Die Daten werden dabei während des Ladevorgangs transparent zwischen der Systemzentrale und der Chipkarte ausgetauscht. Im Rahmen des Ladevorganges finden gegenseitige Authentifikationen mittels Challenge- und Response-Verfahren statt. Solche Verfahren sind bekannt. Entsprechende druckschriftliche Veröffentlichungen sind bereits in der Einleitung angegeben. Erst wenn sich beide Koromunikationspartner gegenseitig von der Authentizität überzeugt haben, wird der Geldbetrag kryptografisch gesichert in die Karte übertragen.

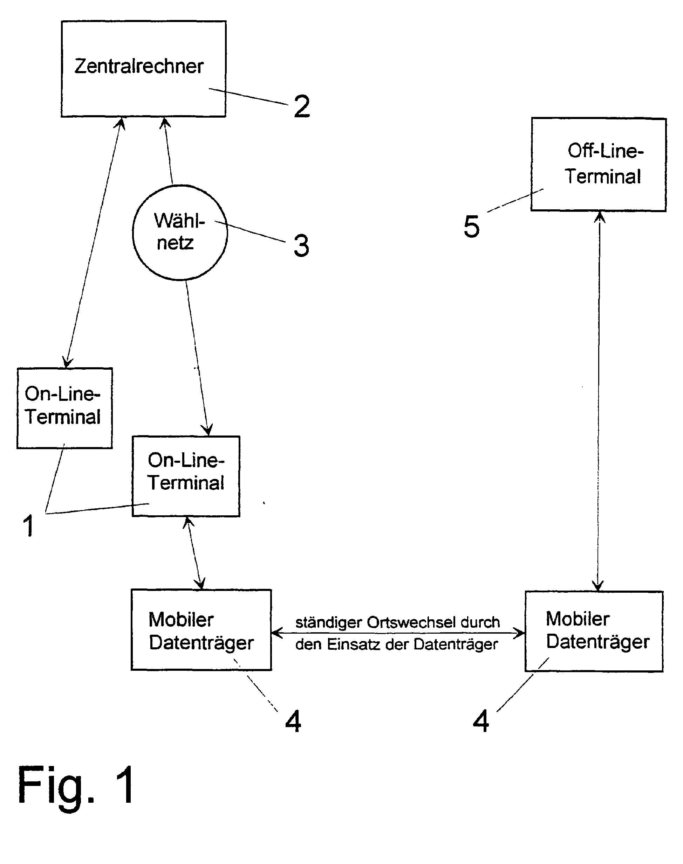

Solche Ladevorgänge können gemäß dem Prinzipschaltbild nach Fig. 1 an einem On-Line-Terminal, wie zum Beispiel an allen öffentlichen Kartentelefonen durchgeführt werden. Die öffentlichen Kartentelefone sind dabei während des Ladevorganges On-Line mit einem Zentralrechner 2 einer Sytemzentrale oder entsprechenden Konzentratoren verbunden-Solche Ladevorgänge können jedoch grundsätzlich auch an speziellen Umlade-Terminals stattfinden. Solche Terminals für Chipkarten sind bekannt. Entsprechende druckschriftliche Veröffentlichungen sind bereits in der Einleitung angegeben. Nachdem auf die Karte entsprechende Geldbeträge geladen wurden, kann die Chipkarte für Bezahlvorgänge eingesetzt werden.

Bezahlvorgänge bei dem Ausführungsbeispiel können an öffentlichen Kartentelefonen der Telekom oder an besonderen Dienstleistungsautomaten erfolgen, wie beispielsweise Fahrkartenautomaten. Der Einsatz der Pay-Card bzw. elektronischen Geldbörse an solchen Automaten wird nachfolgend beschrieben.

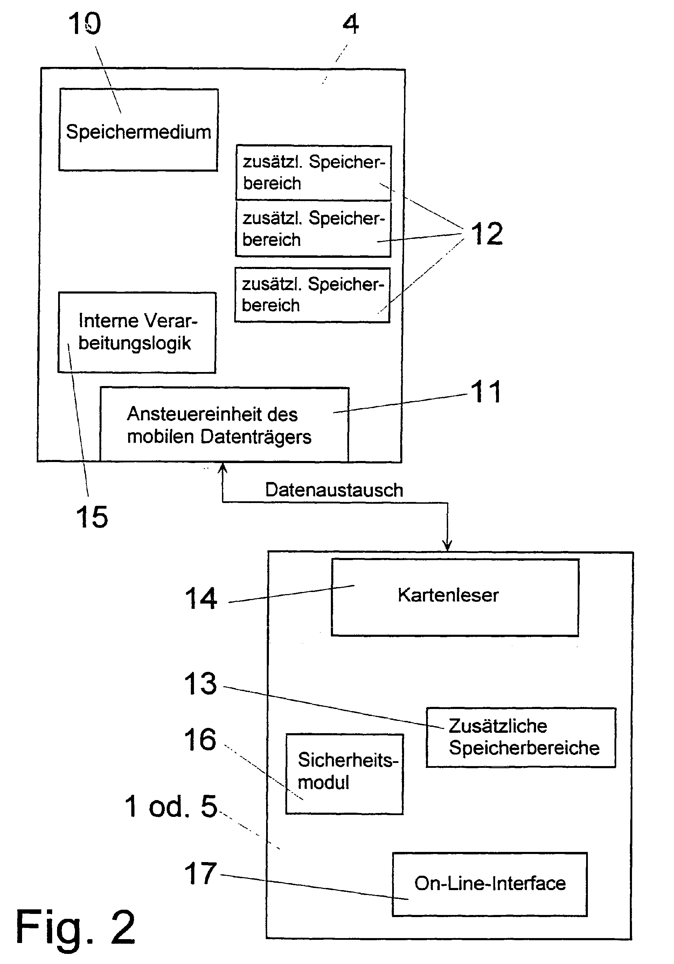

Die Karte ist gemäß Fig. 2 ein mobiler Datenträger 4 (Kunststoffkarte) mit einer internen Verarbeitungslogik 15, einem oder mehreren Speichermedium bzw. -medien 10, zusätzlichen Speicherbereichen 12 und einer Ansteuereinheit 11, die beispielsweise aus Chipkontakten und einer Protokollsteuerung für den Datenaustausch besteht.

Der mobile Datenträger bzw. die Karte 4 kann nun bei unterschiedlichen Diensteanbietern eingesetzt werden. Diensteanbieter sind beispielsweise verschiedene Verkehrsunternehmen wie die Stuttgarter Straßenbahnen, etc.

Zum Einsatz der Karte 4 steckt der Kunde seine Karte in den Kartenleser 14 des jeweiligen als off-Line-Terminal 5 betriebenen Dienstleisungsautomaten. Je Gestaltung der Software des Automaten wird beispielsweise zunächst eine gegenseitige Authentifikation zwischen der Karte 4 und einem Sicherheitsmodul 16 durchgeführt. Danach ist eine Abbuchung aus der Karte 4 möglich. Bei dieser Abbuchung werden wiederum kryptografische Verfahren eingesetzt.

Für eine spätere Abrechnung mit dem entsprechenden Diensteanbieter (Verkehrsunternehmen), bei dem die Chipkarte eingesetzt wurde, wird nun
a) im Sicherheitsmodul ein Zähler, um die aus der Karte 4 abgebuchten Werteeinheiten erhöht und
b) in der Chipkarte 4 wird eine sogenannte Subbörse angelegt. Für die erfindungsgemäße Realisierung ist es erforderlich, daß neben einem Speicherbereich 10 für die Anwendung weitere Speicherbereiche 12 vorhanden sind. Neben dem Applikationsprogramm PayCard sind auf dem mobilen Datenträger 4 weitere Speicherbereiche für die verschiedenen Diensteanbieter angeordnet. Im Rahmen der sogenannten Pay-Card werden diese Speicherbereiche als "Subbörsen" beschrieben. Eine solche Struktur ist beispielsweise in DE 41 26 213 A1 beschrieben. Jedem Verkehrsunternehmen ist eine Subbörse zugeordnet. Bei jeder Nutzung der Börse an einem Automaten wird die Subbörse des jeweiligen Verkehrsbetriebes in der Karte um die aus der Börse entnommenen Geldbeträge erhöht.

Falls auf der PayCard für die Inanspruchnahme von Dienstleistungen nun nicht mehr genügend Geldbeträge vorhanden sind, muß wieder ein Nachladevorgang an einem Kartentelefon oder einem speziellen Terminal 1 erfolgen.

Im Rahmen dieses Nachladevorganges werden sodann alle zwischenzeitlich in der Chipkarte angelegten Subbörsen ausgelesen und an eine Systemzentrale übertragen. Die entsprechenden Speicherbereiche in der Karte gemäß DE 41 26 213 A1 werden danach wieder gelöscht. Erst bei einer erneuten Nutzung der Pay-Card bei einem Dienstleistungsanbieter wird dann wieder für jeden Dienstleistungsanbieter eine Subbörse angelegt. Wird die Karte immer nur bei einem Diensteanbieter eingesetzt, so ist auch nur eine Subbörse erforderlich. Wird die Karte jedoch bei n-Diensteanbietern eingesetzt, so ist es auch erfoderlich, n-Subbörsen in der Karte anzulegen.

Wie zuvor beschrieben, sind in der Regel solche Dienstleistungsautomaten nicht an eine Datenschnittstelle angeschlossen. Im Rahmen eines Regelbetriebes ist es jedoch erforderlich, Daten in bestimmten Zeitabständen auszutauschen. Der Zeitfaktor des Datenaustausches ist in der Regel unkritisch. Es reicht in der Regel aus, wenn innerhalb einer Woche oder eines Monats ein Datenaustausch stattgefunden hat. Weiterhin werden bei der erfindungsgemäßen Lösung nur geringe Datenmengen ausgetauscht. Die maximale Datenmenge ist dabei von dem eingesetzten mobilen Datenträger 4 und der entsprechenden Speicherkapazität des Speichers 10 abhängig. Bei den derzeitig eingesetzten multifunktionalen Chipkarten werden wiederbeschreibbare Speicher bis 8 k eingesetzt. Es ist also durchaus denkbar, daß jeweils ein Speicherbereich von 1 k für die nachfolgende Funktionalität eingesetzt wird. Es können jedoch auch ohne technische Probleme höhere Speicherkapazitäten und Datenaustauschraten bzw. kürzere Intervalle realisiert werden, wenn das erforderlich ist.

Im Rahmen der Benutzung der Karte 4 als elektronische Geldbörse an einem Fahrkartenautomaten können beispielsweise die folgenden Daten in die Karte 4 eingeschrieben werden:
- Zählerstände des Sicherheitsmoduls, die zum Beispiel alle bisher an dem Automaten (bzw. dem in dem Automaten eingesteckten Sicherheitsmodul) von dem mobilen Datenträger 4 abgebuchten Werteinheiten speichern. In einem Zentralsystem werden diese Werteinheiten benötigt, um eine Plausibilisierung der in den Subbörsen gespeicherten Zähler durchzuführen. Weiterhin ist es möglich, mit Hilfe dieser Zähler eine genaue Abrechnung mit dem Automaten durchzuführen. Hierzu kann beispielsweise folgender Datensatz vorgesehen werden: Zählerstand, Datum, ID des SM, MAC über die Daten als Integritätsschutz.
- Sicherheitsinformationen (Transaktionszähler des Sicherheitsmoduls, Anzahl fehlerhaft durchgeführter Authentifikationen, abgewiesene Chipkarten, Softwarestand des Kartenlesers, Softwarestand des Sicherheitsmoduls, etc.)
- Kundenprofil (Restbeträge auf der Karte).
- Wert einer mittleren Abbuchung.

Da in der Chipkarte 4, die als mobiler Datenträger verwendet wird, nur begrenzt Speicherkapazität vorhanden ist, werden immer nur eine vorher festgelegte Anzahl von Daten in den Speicher 10 eingeschrieben. Mit einem in dem Automaten bzw. in dem Sicherheitsmodul 16 des Kartenausgebers festgelegten Algorithmus wird nun bestimmt, in wieviel Karten der gleiche Datensatz eingeschrieben wird, bzw. welche Daten zu einem jeweiligen Zeitpunkt in die Karte 4 geschrieben werden. Sofern in der Chipkarte 4 bereits ein Datensatz von einer vorherigen Benutzung gespeichert ist, wird dieser entweder gelöscht oder es wird an einer weiteren Speicherposition der Chipkarte 4 der Datensatz abgespeichert. Bei letzterer Möglichkeit ist ein Speichermanagement in der Chipkarte 4 vorzusehen, mit dem festgelegt wird, für welche Anwendung welche maximale Anzahl von Daten gespeichert werden kann.

Sofern Geldbeträge in der Chipkarte 4 entladen, das heißt aufgebraucht wurden, muß der Benutzer wieder ein On-Linefähiges Terminal 1 zur Ladung der Chipkarte 4 mit Geldbeträgen aufsuchen. Bei dieser Gelegenheit werden die in der Chipkarte 4 gespeicherten Datensätze an das On-Line-System zur Übertragung an ein Zentralsystem mit Zentralrechner 2 übergeben.

Es kann weiterhin in dem On-Line-Terminal 1 überprüft werden, ob ein gleichartiger Datensatz bereits übergeben wurde.

Weiterhin ist es bei einer weiteren Ausführung möglich, die aus der Chipkarte 4 ausgelesenen Daten zunächst in dem Terminal 1 für einen definierten Zeitraum zwischenzuspeichern. Damit wird sichergestellt, daß innerhalb eines Zeitraumes identische Daten, die auf den verschiedensten Karten gespeichert sind, nicht unnötig mehrfach zur Systemzentrale übertragen werden.

In der Systemzentrale werden nach der Übertragung zu jeder vorhandenen Sicherheitsmodul-ID die aktuellen Datensätze zwischengespeichert. Mit den im system bereits vorhandenen älteren Datensätzen ist es nun möglich, eine Differenz der Zählerstände zu berechnen. Mit diesen Zählerständen, die zeitlich verzögert in das Zentralsystem übertragen werden, kann nun eine Abrechnung mit dem jeweiligen Diensteanbieter erfolgen.

Im Rahmen der On-Line-Verbindung mit dem Zentralsystem werden einerseits Daten von der Chipkarte 4 übergeben; andererseits werden aber auch Daten empfangen und in der Chipkarte 4 gespeichert, die bei der nächsten Benutzung an einem Automaten wieder ausgespeichert werden, um somit eine Aktualisierung der Automatendaten durchzuführen. Beispiele für solche Daten sind:
- Neue Schlüsselgeneration (für die Authentifikation bzw. Abbuchung aus der Chipkarte)
- Tarifinformation
- Sperrdateien (es werden immer nur Deltas übertragen)
- Neue Firmware des SM und IKL (die Übertragung muß mittels mehrerer Pakete erfolgen).

Bei all den oben aufgelisteten Informationen muß ein Datensatz mindestens folgende Details aufweisen:

Nutzdaten, Alter der Daten (wann wurden die Daten erzeugt, gegebenenfalls Kennzeichnung ab wann die Daten im Automaten gültig werden sollen, MAC).

Die Verteilung der Daten an den Automaten folgt statistischen Gesetzen. Nach einer zeitlichen Verzögerung ist mit einer gewissen Wahrscheinlichkeit ein Datenaustausch der Systemzentrale mit allen Automaten erfolgt.

Im folgenden wird ein weiteres Ausführungsbeispiel anhand des Austausches von Telemetriedaten bzw. Straßenbenutzungsgebühren auf speziell ausgerüsteten Straßen, wie Autobahnen beschrieben,.

Als mobile Datenträger 4 dienen hier die Kraftfahrzeuge, die mit einer Chipkarte 4, entsprechenden elektronischen Schaltungen und einem low-cost-Transceiver mit geringer Leistung ausgerüstet sind. Off-Line-Stationen 5 sind dabei an Autobahnzufahrten, Autobahnbrücken oder Anzeigetafeln installiert, während on-Line-Stationen 1 nur in größeren Abständen installiert werden.

Damit sind automatische Gebührenerfassung und -buchung realisierbar. Es können auch Daten über Verkehrsströme, -aufkommen u.s.w. registriert und sofort verarbeitet werden.

Ein weiteres Einsatzgebiet sind Zugangskontrollsysteme. Als mobile Datenträger 4 dienen hier beispielsweise Zugangschipkarten für ein bestimmtes Firmengelände. An den jeweiligen Zutrittsstellen sind zum Beispiel Kartenleser als Off-Line-Stationen 5 angeordnet, in den beispielsweise Berechtigungen gespeichert, Statistiken geführt, unberechtigte Zugriffe, das heißt Zugangsversuche festgehalten oder die Dauer des Aufenthaltes gespeichert werden. Als On-Line-Station 1 kann gegebenenfalls ein Gerät am Hauptzugang dienen von dem alle Daten an die einzelnen Kartenleser 14 gegeben werden bzw. mittels eines mobilen Datenträgers 4 in Form einer Chipkarte Daten bzw. Informationen übergeben werden. Als mobile Datenträger 4 können zum Einsatz kommen: kontaktbehaftete und kontaktlose Chipkarten mit Verarbeitungslogik mit und ohne Prozessor, Schlüssel mit entsprechender integrierter Elektronik, Taschenrechner als Chipkartenausführung, Zugangskontrollkarten u.s.w..

## Patentansprüche

1. Verfahren für Off-Line-Terminals bzw. -Stationen oder -Endgeräte eines Datenverarbeitungs- und/oder Dienstleistungssystems, wobei zwischen den Off-Line-Terminals, -Stationen oder -Endgeräten und anderen Teilen des jeweiligen Datenverarbeitungssystems bzw. Dienstleistungssystems keine direkte Leitungsverbindung oder ein Datenanschluss zum Daten- bzw. Informationsaustausch vorhanden ist und das Datenverarbeitungs- bzw. Dienstleistungssystem aus einem Zentralrechner und/oder Client-Server-Einheiten mit On-Line-Terminals besteht, wobei der Daten- bzw. Informationsaustausch mit Hilfe mobiler Datenträger (4) erfolgt, wobei jeder mobiler Datenträger (4) außer einem Speichermedium (10) mindestens einen zusätzlichen Speicherbereich (12) aufweist, der beim Einsatz an einem Off-Line-Terminal (5) beschrieben und bei einem späteren bzw. weiteren Einsatz in einem On-Line-Terminal (1) ausgelesen wird, **dadurch gekennzeichnet, dass** in dem Off-Line-Terminal (5) ein fertgelegter Algorithmus bestimmt in wieviel verschiedene mobile Datenträger (4) über einen bestimmten Zeitraum bei jeweiliger Nutzung des Off-Line-Terminals (5), die gleiche Daten art des Off-Line-Terminals eingeschrieben wird und dass die mobilen Datenträger (4) mit einem On-Line-Terminal (1) diese Daten austauscht, wobei die Daten im On-Line-Terminal (1) für einen bestimmten Zeitraum zwischengespeichert und einer Überprüfung unterzogen werden, ob gleichartige Daten bereits von einem mobilen Datenträger (4) übergeben wurden und dass anschließend die Daten vom On-Line-Terminal (1) an eine Systemzentrale übergeben werden.

2. Verfahren nach Patentanspruch 1, **dadurch gekennzeichnet, dass** beim Einsatz am On-Line-Terminal (1) der zusätzliche Speicherbereich (12) des mobilen Datenträgers (4) mit aktuellen, die Off-Line-Terminals (5) betreffenden Daten beschrieben wird, die bei einer nächsten Benutzung an einem Off-Line-Terminal (5) ausgespeichert werden, um somit eine Aktualisierung der Off-Line-Terminals (5) durchzuführen.

3. Verfahren nach einem der Patentansprüche 1 oder 2, **dadurch gekennzeichnet, dass** zwischen den Off-Line-Terminals (5) mit einem Kartenleser (14) für den mobilen Datenträger (4) und On-Line-Terminals (1) mit einer Ansteuereinrichtung (11) für den mobilen Datenträger (4) ein Datenaustausch mit Hilfe des sowohl für die Off-Line-Terminals (5) als auch für die On-Line-Terminals (1) kompatiblen mobilen Datenträgers (4) erfolgt, wodurch eine virtuelle On-Line-Fähigkeit der Off-Line-Terminals (5) erreicht wird.

4. Verfahren nach einem oder mehreren der vorhergehenden Patentansprüche, **dadurch gekennzeichnet, dass** Datenzählerstände oder Statusinformationen eines in einem Off-Line-Terminal (5) befindlichen Sicherheitsmodules (16) gespeichert werden, die bei der nächsten Benutzung mit einem mobilen Datenträger (4) eines On-Line-Terminals (1) ausgelesen werden und direkt oder über ein Wählnetz (3) an den Zentralrechner (2), eine zentrale Datenbank oder dergleichen des Datenverarbeitungs- oder Dienstleistungssystems übertragen werden.

5. Verfahren nach einem der Patentansprüche 1 bis 3, **dadurch gekennzeichnet, dass** als Daten Tarifinformationen zu einem Off-Line-Terminal (5) übertragen werden, die vor der nächsten Benutzung eines On-Line-Terminals (1) an den mobilen Datenträger (4) übertragen worden sind.

6. Verfahren nach einem oder mehreren in Kombination der vorhergehenden Patentansprüche, **dadurch gekennzeichnet, dass** die Daten vor der Übergabe an den mobilen Datenträger (4) durch ein sowohl in den Off-Line- als auch in den On-Line-Terminals (5 bzw. 1) angeordneten Sicherheitsmodul, insbesondere mit Kryptogrammen verschlüsselt werden und mit einem Integritätsschutz, zum Beispiel MAC, versehen werden.

7. Verfahren nach einem der Patentansprüche 1 bis 4, **dadurch gekennzeichnet, dass** bei jedem Einsatz des mobilen Datenträgers (4) an einem Off-Line- bzw. On-Line-Terminal (5 bzw. 1) Daten zwischen dem mobilen Datenträger (4) und dem jeweiligen Terminal ausgetauscht werden, und dass der mobile Datenträger als Transportmedium von und zu einem Zentralrechner (2), einer Datenbank oder einem Client-Server-System dient und zwar derart, daß beim Einsatz des mobilen Datenträgers (4) an anderen nun On-Line-fähigen Terminals bzw. - Stationen (5) die nicht zeitkritischen Daten ausgetauscht werden.

8. Anordnung mit Mitteln zur Durchführung des Verfahrens nach einem der Patentansprüche 1 bis 7, **dadurch gekennzeichnet, dass** das Datenverarbeitungs- bzw. Dienstleistungssystem mindestens aus einem Off-Line-Terminal (5) mit einem Kartenleser (14) für einen mobilen Datenträger (4) besteht, der seinerseits mindestens ein Speichermedium (10), zusätzliche Speicherbereiche (12), eine interne Verarbeitungslogik (15) und eine Ansteuereinheit (11) aufweist, die mit einem Kartenleser (14) der Off-Line- bzw. On-Line-Terminals (5 bzw. 1) kompatibel ist und dass die On-Line-Terminals (1) mit einem Zentralrechner (2) oder mit einem Client-Server-System oder mit einer Datenbank verbunden sind, wobei im Off-Line-Terminal (5) ein fertgelegter Algorithmus vorgesehen ist, der bestimmt, in wieviel verschiedene mobile Datenträger (4) über einen bestimmten zeitraum bei jeweiliger Nutzung des Off-Line-Terminals (5) die gleiche Datenart des Off-Line-Terminals (5) eingeschrieben wird.

9. Anordnung nach Patentanspruch 8, **dadurch gekennzeichnet, dass** der mobile Datenträger (4) als kontaktlose oder mit Kontakten ausgerüstete Chipkarte ausgeführt ist.

10. Anordnung nach Patentanspruch 9, **dadurch gekennzeichnet, dass** die Chipkarte als Speicherkarte mit interner Verarbeitungslogik (15), als Prozessorchipkarte, als programmierbare Speicherlogikkarte oder als Chipkartenrechner ausgebildet ist und dass eine Ansteuereinheit (11) für den Datenaustausch im bzw. auf dem mobilen Datenträger (4) angeordnet ist.

11. Anordnung nach einem der Patentansprüche 1 bis 10, **dadurch gekennzeichnet, dass** als Off-Line-Terminals (5) Fahrkartenautomaten oder Dienstleistungsautomaten dienen, die mit der Ansteuereinheit (11) des mobilen Datenträgers (4) voll kompatibel sind und dass als On-Line-Terminal (1) ein Kartentelefon dient, das mit einer Systemzentrale verbunden ist und den mobilen Datenträger (4) als Zahlungsmedium akzeptiert, wobei der mobile Datenträger (4) sowohl zum Bezahlen, Telefonieren, zum Nachladen und als Verbindungsmedium zu einem Off-Line-Terminal (5) dient.

12. Verwendung der Anordnung bzw. des mobilen Datenträgers nach einem der Patentansprüche 1 bis 11, **dadurch gekennzeichnet, dass** er als Daten- bzw. Informationsaustauschsmedium für Zugangsberechtigungsterminals, für automatische Verkehrserfassungs- und Zahlungssysteme, für Geldbörsensysteme, Dienstleistungssyteme mit Daten- bzw. Informationsaustausch, für automatische Fertigungssysteme oder dergleichen dient.

## Claims

1. Method for offline terminals or offline stations or offline terminal equipment of a data-processing and/or service system, wherein there is no direct line connection or data connection between the offline terminals, stations, or terminal equipment and other parts of the relevant data-processing and/or service system for the purpose of exchanging data or information, and the data-processing or service system consists of a central computer and/or client/server units with online terminals, wherein the exchange of data or information takes place with the aid of mobile data carriers (4), wherein each mobile data carrier (4) has, in addition to a storage medium (10), at least one additional storage area (12) that is written when used with an offline terminal (5) and is read out when subsequently or additionally used in an online terminal (1), **characterized in that** a defined algorithm in the offline terminal (5) determines the number of different mobile data carriers (4) into which the identical data type of the offline terminal (5) is written upon the respective use of the offline terminal over a specific period of time, and **in that** the mobile data carrier (4) exchanges these data with an online terminal (1), wherein the data are buffered in the online terminal (1) for a specific period of time and are examined to determine whether data of the same type have already been transferred from a mobile data carrier (4), and **in that** the data are subsequently transferred from the online terminal (1) to a system control center.

2. Method according to claim 1, **characterized in that** when the mobile data carrier is used with an online terminal (1), the additional storage area (12) of the mobile data carrier (4) is written with current data concerning the offline terminals (5) that is read out upon a next use with an offline terminal (5) in order to carry out an updating of the offline terminals (5).

3. Method according to any one of claims 1 or 2, **characterized in that** a data exchange between the offline terminals (5) with a card reader (14) for the mobile data carrier (4) and the online terminal (1) with control unit (11) for the mobile data carrier (4) takes place with the aid of the mobile data carrier (4), which is compatible with both the offline terminals (5) and with the online terminals (1), by which means a virtual online capability is achieved for the offline terminals (5).

4. Method according to one or more of the preceding claims, **characterized in that** data counter states or status information of a security module (16) located in an offline terminal (5) are stored, said states or information being read out upon the next use with a mobile data carrier (4) of an online terminal (1) and being transmitted, directly or through a dial-up network (3), to the central computer (2), a central database, or the like, of the data-processing or service system.

5. Method according to any one of claims 1 through 3, **characterized in that** tariff information for an offline terminal (5) is transferred as data, said information being transferred to the mobile data carrier (4) before the next use of an online terminal (1).

6. Method according to any one or more of the preceding claims in combination, **characterized in that** before the data are transferred to the mobile data carrier (4), they are encrypted by a security module that is arranged in both the offline terminal (5) and the online terminal (1), in particular using cryptograms, and are provided with integrity protection, for example MAC.

7. Method according to any one of claims 1 through 4, **characterized in that** upon each use of the mobile data carrier (4) with an offline terminal (5) or an online terminal (1), data are exchanged between the mobile data carrier (4) and the applicable terminal, and **in that** the mobile data carrier serves as a transport medium from and to a central computer (2), database, or client/server system, specifically in such a manner that the non-time-critical data are exchanged when the mobile data carrier (4) is used with other online-capable terminals or stations (5).

8. Arrangement having means for carrying out the method according to any one of claims 1 through 7, **characterized in that** the data-processing or service system consists at least of an offline terminal (5) with a card reader (14) for a mobile data carrier (4), which in turn has at least one storage medium (10), additional storage areas (12), internal processing logic (15), and a control unit (11) that is compatible with a card reader (14) of the offline terminal (5) or online terminal (1), and **in that** the online terminals (1) are connected to a central computer (2) or to a client/server system or to a database, wherein there is provided in the offline terminal (5) a defined algorithm that determines the number of different mobile data carriers (4) into which the identical data type of the offline terminal (5) is written upon the respective use of the offline terminal (5) over a specific period of time.

9. Arrangement according to claim 8, **characterized in that** the mobile data carrier (4) is embodied as a chip card that is contactless or is equipped with contacts.

10. Arrangement according to claim 9, **characterized in that** the chip card is embodied as a storage card with internal processing logic (15), as a processor chip card, as a programmable logic storage card or as a chip card computer, and **in that** a control unit (11) for data exchange is provided in or on the mobile data carrier (4).

11. Arrangement according to any one of claims 1 through 10, **characterized in that** ticket machines or service machines that are fully compatible with the control unit (11) of the mobile data carrier (4) serve as offline terminals (5), and **in that** a card telephone that is connected to a system control center and accepts the mobile data carrier (4) as a payment medium serves as online terminal (1), wherein the mobile data carrier (4) is used for paying, making telephone calls, recharging, and as a medium for connecting to an offline terminal (5).

12. Use of the arrangement and/or of the mobile data carrier according to any one of claims 1 through 11, **characterized in that** it is used as a medium for exchanging data or information for access authorization terminals, automatic traffic detection and payment systems, wallet systems, service systems having data or information exchange, automatic production systems, and the like.

## Revendications

1. Procédé pour des terminaux, stations ou équipements terminaux hors ligne d'un système de traitement de données et/ou d'un système de prestation de services, aucune ligne de liaison directe ou connexion de données n'existant entre les terminaux, stations ou équipements terminaux hors ligne et d'autres parties du système de traitement de données ou système de prestation de services respectif pour l'échange de données ou d'informations, et le système de traitement de données ou de prestation de services consistant en un calculateur central et/ou en des unités client-serveur comportant des terminaux en ligne, l'échange de données ou d'informations s'effectuant à l'aide de supports de données mobiles (4), chaque support de données mobile (4) comportant, outre un support d'enregistrement (10), au moins un emplacement mémoire supplémentaire (12) dans lequel des données sont écrites lors de l'utilisation sur un terminal hors ligne (5) et lues lors d'une utilisation ultérieure ou supplémentaire dans un terminal en ligne (1), **caractérisé en ce que**, dans le terminal hors ligne (5), un algorithme défini détermine le nombre de supports de données mobiles (4) différents dans lesquels, sur une période donnée avec utilisation respective du terminal hors ligne (5), le même type de données du terminal hors ligne sera écrit, et les supports de données mobiles (4) échangent ces données avec un terminal en ligne (1), ces données étant entreposées dans le terminal en ligne (1) pour une période donnée et soumises à une vérification pour déterminer si des données du même type ont déjà été transmises par un support de données mobile (4) et, ensuite, le terminal en ligne (1) transmet les données à une centrale du système.

2. Procédé selon la revendication 1, **caractérisé en ce que**, lors de l'utilisation sur le terminal en ligne (1), des données actuelles concernant les terminaux hors ligne (5) sont écrites dans l'emplacement mémoire supplémentaire (12) du support de données mobile (4), ces données étant extraites de la mémoire lors d'une utilisation suivante sur un terminal hors ligne (5) pour réaliser ainsi une mise à jour des terminaux hors ligne (5).

3. Procédé selon l'une des revendications 1 ou 2, **caractérisé en ce que**, entre les terminaux autonomes (5) dotés d'un lecteur de cartes (14) pour le support de données mobile (4) et des terminaux en ligne (1) comportant un dispositif de commande (11) pour le support de données mobile (4), un échange de données s'effectue à l'aide du support de données mobile (4) compatible aussi bien avec les terminaux hors ligne (5) qu'avec les terminaux en ligne (1), ce qui permet d'obtenir une capacité en ligne virtuelle des terminaux hors ligne (5).

4. Procédé selon l'une ou plusieurs des revendications précédentes, **caractérisé en ce que** des consommations compteur de données ou des informations d'état d'un module de sécurité (16) intégré dans un terminal hors ligne (5) sont enregistrés pour être lus lors de l'utilisation suivante à l'aide d'un support de données mobile (4) d'un terminal en ligne (1) et transmis directement ou par l'intermédiaire d'un réseau commuté (3) au calculateur central (2), à une base de données centrale ou similaire du système de traitement de données ou de prestation de services.

5. Procédé selon l'une des revendications 1 à 3, **caractérisé en ce que** les données transmises sont des informations tarifaires sur un terminal hors ligne (5) qui ont été transmises au support de données mobile (4) avant l'utilisation suivante d'un terminal en ligne (1).

6. Procédé selon l'une ou plusieurs des revendications précédentes combinées entre elles, **caractérisé en ce que**, avant d'être transmises au support de données mobile (4), les données sont chiffrées, notamment à l'aide de cryptogrammes, par un module de sécurité disposé aussi bien dans les terminaux hors ligne (5) que dans les terminaux en ligne (1), et munies d'une protection d'intégrité, telle que MAC.

7. Procédé selon l'une des revendications 1 à 4, **caractérisé en ce qu'**à chaque utilisation du support de données mobile (4) sur un terminal hors ligne (5) ou un terminal en ligne (1), des données sont échangées entre le support de données mobile (4) et le terminal respectif et le support de données mobile sert de moyen de transport en provenance et en direction d'un calculateur central (2), d'une base de données ou d'un système client-serveur, de manière telle que, lors de l'utilisation du support de données mobile (4) sur d'autres terminaux ou stations (5) ayant désormais la capacité en ligne, les données non critiques dans le temps soient échangées.

8. Dispositif comportant des moyens pour la réalisation du procédé selon l'une des revendications 1 à 7, **caractérisé en ce que** le système de traitement de données ou de prestation de services se compose d'au moins un terminal hors ligne (5) doté d'un lecteur de cartes (14) pour un support de données mobile (4) qui comporte pour sa part au moins un support d'enregistrement (10), des emplacements mémoire (12) supplémentaires, une logique de traitement (15) interne et une unité de commande (11) compatibles avec un lecteur de cartes (14) des terminaux hors ligne (5) ou terminaux en ligne (1) et les terminaux en ligne (1) sont reliés à un calculateur central (2) ou à un système client-serveur ou à une base de données, un algorithme défini étant prévu dans le terminal hors ligne (5) qui détermine le nombre de supports de données mobiles (4) differénts dans lesquels le même type de données du terminal hors ligne (5) sera écrit sur une période donnée avec utilisation respective du terminal hors ligne (5).

9. Dispositif selon la revendication 8, **caractérisé en ce que** le support de données mobile (4) est réalisé sous la forme d'une carte à puce sans contact ou équipée de contacts.

10. Dispositif selon la revendication 9, **caractérisé en ce que** la carte à puce est conçue comme une carte mémoire à logique de traitement interne (15), comme carte à puce de processeur, comme carte de logique de mémoire programmable ou comme calculateur à carte à puce, et une unité de commande (11) pour l'échange de données est disposée dans ou sur le support de données mobile (4).

11. Dispositif selon l'une des revendications 1 à 10, **caractérisé en ce que** des distributeurs de tickets ou automates de prestation de services entièrement compatibles avec l'unité de commande (11) du support de données mobile (4) servent de terminaux hors ligne (5) et un téléphone à carte relié à un centre de système et acceptant le support de données mobile (4) comme support de paiement sert de terminal en ligne (1), le support de données mobile (4) servant aussi bien pour payer, téléphoner, recharger que de support de liaison vers un terminal hors ligne (5).

12. Utilisation du dispositif ou du support de données mobile selon l'une des revendications 1 à 11, **caractérisée en ce qu'**il sert de support d'échange de données ou d'informations pour des terminaux d'autorisation d'accès, des systèmes automatiques de mesure du trafic routier et de péage, des systèmes de porte-monnaie, des systèmes de prestation de services avec échange de données ou d'informations, des systèmes automatiques de fabrication ou similaire.
